# EUROPÄISCHE PATENTSCHRIFT

(11) **EP 0 564 896 B1**
(45) Veröffentlichungstag und Bekanntmachung des Hinweises auf die Patenterteilung: **05.08.1998**
(21) Anmeldenummer: 93104811.0
(22) Anmeldetag: 24.03.1993
(51) Int. Cl.: H01M 2/06, H01M 2/30

(54) **Poldurchführung für Akkumulatorenzellen**
Feed through for the terminal of accumulator cells
Traversée de borne pour cellules d'accumulateurs

(30) Priorität: 08.04.1992 DE 4212214
(43) Veröffentlichungstag der Anmeldung: 13.10.1993
(73) Patentinhaber: Gürtler, Josef, Dr., 59505 Bad Sassendorf (DE)
(72) Erfinder: Gürtler, Josef, Dr., W-4772 Bad Sassendorf 3 (DE)
(74) Vertreter: VOSSIUS & PARTNER

(56) Entgegenhaltungen:
- DE-A- 1 596 128
- DE-A- 1 953 414
- DE-B- 1 013 339
- DE-B- 1 146 149
- US-A- 1 411 414
- PATENT ABSTRACTS OF JAPAN vol. 4, no. 91 (E-17)(573) 28. Juni 1980 & JP-A-55057259

## Beschreibung

Die Erfindung betrifft eine Poldurchführung durch den Deckel einer Akkumulatorenzelle.

Bekanntlich müssen die Pole der Akkumulatorenzellen, die durch den Deckel des Zellengehäuses nach außen hindurchgeführt sind, elektrolytdicht gegen den Deckel abgedichtet sein, damit z.B. bei Bleibatterien die sehr kapillaraktive Schwefelsäure nicht nach außen gelangen kann. Durch die kapillaraktiven Eigenschaften der Schwefelsäure hat diese die Fähigkeit, auch durch feinste Spalte und Haarrisse hindurchzukriechen.

Für die Durchführung der elektrischen Pole einer Zelle durch den Zellendeckel werden Buchsen verwendet (sogenannte Polbuchsen), die beim Spritzen des aus Kunststoff bestehenden Zellendeckels mit eingespritzt werden. Die elektrischen Pole werden dann später bei der Endmontage der Zellen in die Polbuchsen eingesetzt. Dementsprechend ist zu unterscheiden zwischen 1) der Abdichtung der Polbuchse gegen den Zellendeckel und 2) der Abdichtung des elektrischen Pols gegen die Polbuchse. Die Erfindung betrifft aussschließlich den Bereich der elektrolytdichten Abdichtung zwischen Polbuchse und dem Deckel der Akkumulatorenzelle.

Für diesen Bereich ist es bekannt, Gummidichtungen oder Vergußmassen auf der Basis eines Gießharzes, Schmelzklebers oder dergleichen zu verwenden, die jedoch relativ teuer sind und im Verlaufe der Gebrauchsdauer altern oder durch mechanische Einwirkungen undicht werden können.

In der Praxis haben sich deshalb in den letzten Jahren Polbuchsen durchgesetzt, die in ihrem Fußbereich ringförmig umlaufende, radial nach außen sich erstreckende Rippen aufweisen, die ein sogenanntes Labyrinth bilden, das bei der Herstellung des Deckels aus Kunststoff in den Deckel mit eingeformt wird.

Aber auch Labyrinth-Abdichtungen dieser Art sind mit erheblichen Problemen behaftet, wie dies in der erst kürzlich veröffentlichten US-PS 5 077 892 ausführlich beschrieben worden ist.

Ein Problem betrifft das Anformen der Rippen des Labyrinths außenseitig am Fußbereich der Polbuchse. Bei den zur Zeit am meisten verbreiteten Bleibatterien werden die Polbuchsen entweder aus Blei gegossen oder aus Blei kalt formgepreßt. In beiden Fällen muß ein geteiltes Formwerkzeug verwendet werden, dessen Teilungsebene in der Ebene der Achse der Polbuchse liegt, da anders die von der Achse der Polbuchse radial nach außen vorstehenden Rippen des Labyrinths nicht entformbar sind.

Diese Teilungsebene des Formwerkzeuges macht Schwierigkeiten, da dort die der Form entnommene Polbuchse immer einen mehr oder weniger stark ausgebildeten metallischen Grat aufweist. Wird dieser Grat nicht sorgfältig entfernt (was entsprechende Kosten verursacht), dann besteht die Gefahr, daß in diesem Bereich die Rippen des Labyrinths beim Spritzen des Kunststoffdeckels nicht ausreichend dicht von der Kunststoffmasse umflossen werden und Haarspalte in der Verbindung Polbuchse-Deckel vorhanden sein können, durch die Elektrolyt aus der Zelle austreten kann.

In der bereits genannten US-PS 5 077 892 ist ein Weg beschrieben, die unerwünschte Gratausbildung an den Rippen des Labyrinths zu vermeiden. Dieser Weg erfordert zunächst die Herstellung eines homogenen Stangenmaterials aus Blei, das dann entsprechend der gewünschten Länge der Polbuchsen auf Länge geschnitten und sodann in einer Drehbank bearbeitet wird, um die ringförmig an der Außenseite der Polbuchse umlaufenden Rippen des Labyrinths gratfrei herzustellen. Das ist natürlich ein sehr aufwendiger Weg, der bei einer Großserienfertigung der Polbuchsen nicht wirtschaftlich ist.

Aufgabe der Erfindung ist es, nach einem anderen und kostengünstigeren Lösungsweg zu suchen.

Diese Aufgabe wird erfindungsgemäß nach dem vorliegenden alleinigen Anspruch dadurch gelöst, daß der Fußbereich der Polbuchse einen Flansch aufweist, der sich von der Achse der Polbuchse radial nach außen erstreckt und daß sich die Rippen des Labyrinths ausgehend von dem Flansch in etwa parallel zur Achse der Polbuchse erstrecken, und daß der Flansch (7) sowohl an seiner Unterseite als auch an seiner Oberseite mit Rippen (9,10) versehen ist.

Durch die neue Ausbildung des Labyrinths mittels des Flansches und der davon ausgehenden Rippen werden wesentliche Vorteile erreicht.

Zunächst ist ein Vorteil, daß auch die neue Ausbildung des Labyrinths durch Formguß oder Formpressen der Polbuchse hergestellt werden kann, wie dies bisher für die Großserienfertigung üblich und am kostengünstigsten ist.

Ein zweiter Vorteil ergibt sich dadurch, daß die neue Ausbildung des Labyrinths eine entsprechend andere Teilungsebene des Formwerkzeuges erfordert. Die Teilungsebene muß jetzt so angeordnet sein, daß der radial sich erstreckende Flansch mit den parallel zur Achse der Polbuchse sich erstreckenden Rippen entformbar bleibt. Dementsprechend ist die Teilungsebene immer so zu wählen, daß der Flansch in seiner radialen Erstreckung voll in der Teilungsebene liegt, so daß die metallischen Grate, die sich beim Formguß oder beim Formpressen der Polbuchse in der Teilungsebene ausbilden können, immer nur am äußeren Durchmesser des Flansches entstehen können und zwar ebenfalls nur mit radialer Erstreckung nach außen.

Die sich am äußeren Rand bzw. am größten Außendurchmesser des Flansches radial nach außen erstreckenden Grate sind für die Dichtigkeit des Läbyrinthsnicht nachteilig. Das Gegenteil ist der Fall. Sie bewirken, daß die theoretische Länge des Labyrinthweges erhöht wird, den ein Elektrolyt auf seinem Wege von innen nach außen durchlaufen müßte. Dadurch ist die Wirksamtkeit der Labyrinth-Abdichtung verbessert. Dementsprechend kann bei den erfindungsgemäßen Polbuchsen akzeptiert werden, daß metallische Grate am äußeren Umfang des Flansches vorhanden sind.

Ein dritter Vorteil ergibt sich dadurch, daß das Labyrinth der neuen Polbuchse für den Einbau in den Zellendeckel nur eine geringe Einbauhöhe (in Achsrichtung der Polbuchse gemessen) beansprucht. Dadurch steht der in den Zellendeckel eingeformte Fußbereich der Polbuchse nicht mehr so stark in den Innenraum der Akkumulatorenzelle vor. Der Innenraum der Akkumulatorenzellen kann somit durch höher gebaute Elektrodenplatten besser genutzt werden.

Nachfolgend wird ein Ausführungsbeispiel der Erfindung anhand der Zeichnung näher beschrieben. Es zeigt:

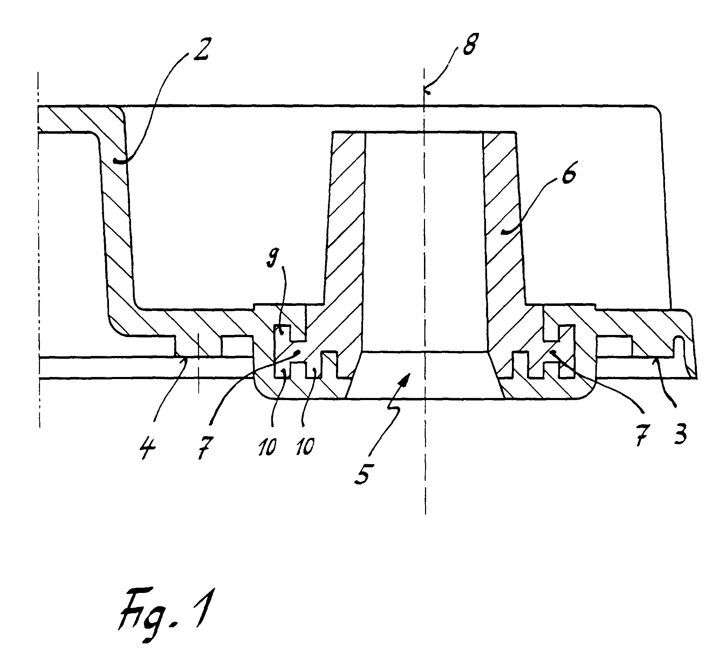

- Fig. 1: einen Querschnitt durch einen Zellendeckel mit Polbuchse.

Der in einem Teilausschnitt dargestellte Zellendeckel 2 besteht aus Kunststoff und ist bei der gebrauchsfertigen Batterie mit seinen Dichtflächen 3 und 4 dicht auf ein Batteriegefäß (nicht dargestelt) aufgesetzt. Der Abstand der Dichtflächen 3 und 4 voneinander entspricht der Breite einer Zelle.

Der Zellendeckel 2 steht mit dem Fußbereich der Polbuchse 6 nur geringfügig nach unten in den Innenraum der Zelle vor. Der elektrische Pol (nicht dargestellt) wird später bei der Endmontage der Zellen in den Innenkonus 5 der Polbuchse 6 eingesetzt.

An dem Fußbereich der Polbuchse 6 ist ein Flansch 7 vorhanden, der sich radial nach außen erstreckt. An der Unterseite und an der Oberseite dieses Flansches 7 befinden sich die angeformten Rippen 9 und 10. Die Rippen erstrecken sich parallel zur Achse 8 der Polbuchse.

Der Fußbereich der Polbuchse 6 wird bei der Herstellung des Deckels 2 in die Werkzeugform des Deckels mit eingelegt und ist - wie aus der Darstellung ersichtlich - vollständig in das Material des Zellendeckels eingebettet.

## Patentansprüche

1. Elektrolytdichte Poldurchführung durch den Deckel einer Akkumulatorenzelle
- mit einer Polbuchse, die in ihrem Fußbereich und außenseitig ringförmig umlaufende Rippen aufweist, die sich in etwa parallel zur Achse (8) erstrecken und die ein sogenanntes Labyrinth bilden, das bei der Herstellung des Deckels aus Kunststoff in den Deckel mit eingeformt wird,
dadurch gekennzeichnet,
- daß der Fußbereich der Polbuchse (6) einen Flansch (7) aufweist, der sich von der Achse (8) der Polbuchse radial nach außen erstreckt
- und daß der Flansch (7) sowohl an seiner Unterseite als auch an seiner Oberseite mit Rippen (9, 10) versehen ist.

## Revendications

1. Traversée de borne étanche à l'électrolyte, à travers le couvercle d'une cellule d'accumulateur
- avec une douille de borne qui présente, dans sa zone de pied et vers l'extérieur, des nervures annulaires qui s'étendent sensiblement parallèlement à l'axe (8) et forment ce que l'on désigne par un labyrinthe, qui est moulé dans le couvercle, lors de la réalisation du couvercle, en matière plastique,
caractérisée en ce que
- la zone de pied de la douille de borne (6) présente un rebord (7) qui s'étend radialement vers l'extérieur à partir de l'axe (8) de la douille de borne,
- et en ce que le rebord (7) est pourvu de nervures (9, 10), aussi bien à sa face inférieure qu'à sa face supérieure.

## Claims

1. Electrolyte-tight feedthrough leading through the cover of an accumulator cell
- comprising a terminal post having in its foot region and on the outside annular encircling ribs extending substantially parallel to the axis (8) forming a so-called labyrinth which, during the manufacture of the cover from plastic, is integrally formed therewith,
characterized in that
- the foot region of the terminal post (6) has a flange (7) radially extending outwardly from the axis (8) of the terminal post,
- and the flange (7) is provided with ribs (9,10) on its lower side as well as on its upper side.
